# EUROPÄISCHE PATENTSCHRIFT

(11) **EP 1 857 386 B1**
(45) Veröffentlichungstag und Bekanntmachung des Hinweises auf die Patenterteilung: **29.07.2009**
(21) Anmeldenummer: 07008925.5
(22) Anmeldetag: 03.05.2007
(51) Int. Cl.: B65G 53/60, B65G 53/64, B65G 53/24, B65G 53/46

(54) **Saugförderanlage zum Transportieren von Einzelteilen**
Suction conveyor facility for transporting individual pieces
Dispositif d'aspiration destiné au transport de pièces individuelles

(30) Priorität: 18.05.2006 DE 202006008093 U
(43) Veröffentlichungstag der Anmeldung: 21.11.2007
(73) Patentinhaber: Engel, Gerhard, 74363 Güglingen (DE)
(72) Erfinder: Engel, Gerhard, 74363 Güglingen (DE)
(74) Vertreter: Müller, Hans

(56) Entgegenhaltungen:
- DE-A1- 3 327 857
- GB-A- 1 247 211

## Beschreibung

### TECHNISCHES GEBIET

Die Erfindung betrifft eine Saugförderanlage, mit der Einzelteile der unterschiedlichsten Art von einer Bearbeitungsstätte zur nächsten Bearbeitungsstätte transportiert werden können. Solche Einzelteile können Wäschestücke sein, die in entsprechenden Bearbeitungsstätten gewaschen oder gereinigt oder in nachfolgenden Bearbeitungsstätten geschleudert, getrocknet, gebügelt, übereinander gestapelt und dergleichen mehr werden. Die Wäschestücke können dabei in der Saugförderanlage trocken oder feucht vorhanden sein. Saugförderanlagen werden auch in anderen Branchen wie beispielsweise in der Bekleidungsindustrie oder Autoindustrie eingesetzt, so dass als zu fördernde Einzelteile dann Jeans, Leibwäsche oder Socken beziehungsweise Kunststoff-Gummiteile oder Fußmatten beispielsweise vorhanden sind.

Unter Wäschestücken sollen dabei hier alle Arten von textilen und nicht textilen Gegenständen verstanden werden, die gewaschen, gereinigt, geschleudert, getrocknet und sonst wie weiterbehandelt werden. Solche Wäschestücke können dementsprechend Leibwäsche, Hemden, Hosen, Kleider, Kittel, Schürzen, Bettwäsche, aber auch Putzlappen, Mopps, Gummihandschuhe, Schonbezüge aus Kunststoff und dergleichen sein.

### STAND DER TECHNIK

Saugförderanlagen beinhalten ein Rohrleitungssystem, das von und zu den einzelnen Bearbeitungsstätten führt. Den einzelnen, sich aus mehreren gleichartigen Bearbeitungsmaschinen zusammensetzenden Bearbeitungsstätten können mehrere Speicherräume vorgeschaltet sein. Die der betreffenden Bearbeitungsstätte gegebenenfalls auch diskontinuierlich zugeführten, unterschiedlich viele und unterschiedliche Arten von Wäschestücken enthalten könnende Wäscheposten können so in den einzelnen Speicherräumen mengen- und artenweise zwischengespeichert und anschließend den einzelnen Bearbeitungsmaschinen nacheinander zugeführt werden, wie es der Betrieb dieser Bearbeitungsmaschinen erforderlich macht. Dafür sind Weichen zwischen den Speicherräumen vorhanden, um die jeweiligen Wäschestücke dem jeweiligen Speicherraum gezielt zuführen zu können. Diese Weichen besitzen technisch aufwendige, motorisch beziehungsweise pneumatisch angetriebene Linearführungen, um die ankommenden Einzelteile, je nach Stellung der Weiche, in den einen oder anderen Speicherraum transportieren zu können. Eine solche Saugförderanlage mit in ihr integrierten Weichen hat sich in der Praxis bewährt.

### DARSTELLUNG DER ERFINDUNG

Ausgehend von diesem vorbekannten Stand der Technik liegt der Erfindung die Aufgabe zugrunde eine Saugförderanlage der eingangs genannten Art anzugeben, die auf wirtschaftlich möglichst günstige Weise hergestellt und betrieben werden kann.

Diese Erfindung ist durch die Merkmale des Hauptanspruchs gegeben. Sinnvolle Weiterbildungen der Erfindung sind Gegenstand von sich an den Hauptanspruch anschließenden weiteren Ansprüchen.

Die erfindungsgemäße Saugförderanlage der eingangs genannten Art zeichnet sich durch einen oder mehrere in die Förderanlage integrierte Zwischenspeicher aus. Jeder dieser Zwischenspeicher besitzt zumindest einen ersten Speicherraum für die durch die Saugförderanlage hindurchgesaugten Wäschestücke. Aus diesem ersten Speicherraum können die Einzelteile wie beispeilsweise die Wäschestücke in zumindest einen weiteren Speicherraum hineingefördert werden, der unterhalb des ersten Speicherraumes angeordnet ist. Die mehreren Speicherräume können somit als Speicherturm angeordnet werden. In den obersten Speicherraum dieses Speicherturms werden Einzelteile hineingesaugt. Diese Einzelteile können dann in den einen oder in die mehreren darunter angeordneten Speicherräume nacheinander hineingefördert werden wie insbesondere nacheinander hineinfallen. Aus dem untersten dieser Speicherräume können die Einzelteile dann entnommen und der oder den Bearbeitungsmaschinen zugeführt werden. Bei einem solchen Speicherturm braucht nur der oberste der mehreren Speicherräume saugdicht ausgebildet zu werden. Außerdem werden keine Weichen zum Verteilen der Einzelteile auf die einzelnen Speicherräume erforderlich. Die Erfindung nutzt damit die Erkenntnis, dass in Wäschereibetrieben und sonstigen Be- und Verarbeitungsbetrieben regelmäßig Raum nach oben hin ausreichend zur Verfügung steht.

Weitere Vorteile, Einzelheiten und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine erste Ausführungsform eines in eine Saugförderanlage eines Wäschereibetriebes integrierten Speicherturms,
- Fig. 2: eine zweite Ausführungsform eines solchen Speicherturms.

### WEGE ZUM AUSFÜHREN DER ERFINDUNG

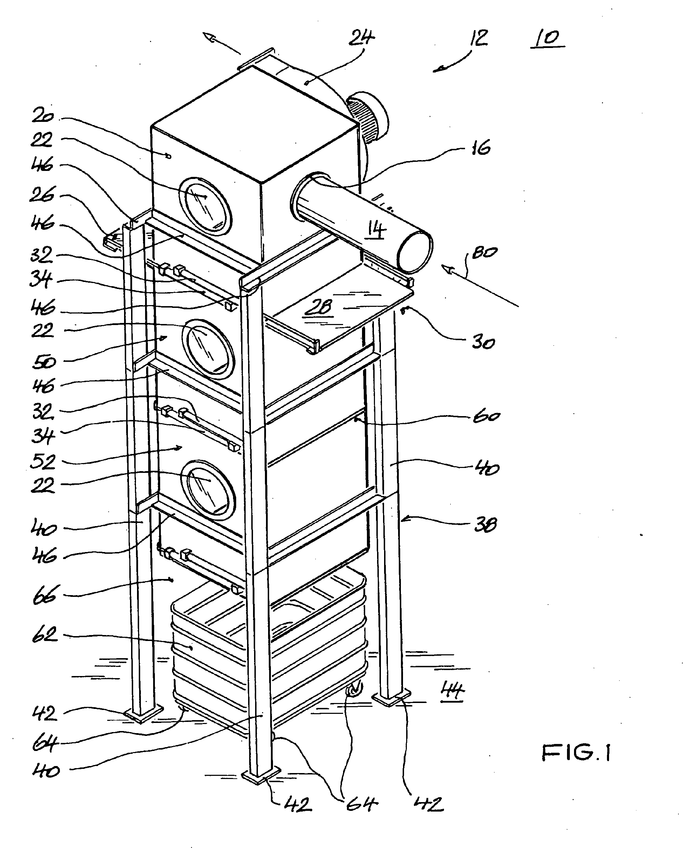

Von einer nicht näher dargestellten Saugförderanlage 10 ist in Fig. 1 ein zu einem Speicherturm 12 hinführendes Saugrohr 14 ausschnittsweise dargestellt. Das Saugrohr 14 endet in einem Saugrohreinlass 16, der in einer - im vorliegenden Beispielsfall würfelartigen - Speicherbox 20 endet.

In einer anderen Seitenwand der Speicherbox 20 ist ein Sichtfenster 22 vorhanden, durch das hindurch der Innenraum der Speicherbox 20 und die durch das Saugrohr 14 in die Speicherbox 20 hineingesaugten Wäschestücke beobachtet werden können. An der Außenseite der Speicherbox 20 ist ein Sauggebläse 24 angeflanscht, durch das der zum Einsaugen von Wäschestücken in der Speicherbox 20 erforderliche Unterdruck erzeugt werden kann. Der Boden dieser ansonsten verschlossenen Speicherbox 20 wird durch eine zwei Flachschieber 26, 28 aufweisende Flachschiebereinrichtung 30 luftdicht verschlossen. In Fig. 1 ist die auseinander gezogene Stellung der beiden Flachschieber 26, 28 dargestellt. Bei dieser Stellung der beiden Flachschieber 26, 28 ist der Boden der Speicherbox 20 vollständig offen. Das Hin- und Herverschieben der beiden Flachschieber 26, 28 erfolgt mittels zweier Pneumatikzylinder 32, 34.

Die oberste, erste Speicherbox 20 des Speicherturms 12 ist oben auf einem Gestell 38 befestigt. Das Gestell 38 besitzt vier Ständer 40, von denen in der Zeichnung drei Ständer erkennbar sind. Die Ständer 40 ruhen mittels Fußplatten 42 auf einem Boden 44 auf. Die vier Ständer 40 sind durch mehrere horizontal verlaufende vier Winkelprofile 46 ausgesteift. An den obersten Winkelprofilen 46 ist die oberste Speicherbox 20 befestigt.

Unterhalb der obersten, ersten Speicherbox 20 sind zwei weitere Speicherboxen übereinander an dem Gestell 38 beziehungsweise an dessen Winkelprofilen 46 befestigt. Die obere Speicherbox 50 dieser beiden Speicherboxen 50, 52 ist unterhalb der Flachschiebereinrichtung 30 der obersten Speicherbox 20 positioniert. Diese Speicherbox 50 besitzt keinen weiteren Deckel und besteht nur aus vier Wänden, welche keine großen Stabilitäten aufweisen müssen, da sie keinem Unterdruck ausgesetzt werden. Nach Öffnen der Flachschiebereinrichtung 30, wie es in Fig. 1 dargestellt ist, können die in die Speicherbox 20 eingesaugten Wäschestücke aus der Speicherbox 20 in die darunter angeordnete Speicherbox 50 hineinfallen. Auch in dieser zweiten Speicherbox 50, wie auch in der darunter angeordneten weiteren Speicherbox 52 ist jeweils ein Sichtfenster 22 in einer Seitenwand angeordnet.

Die Speicherbox 50 wird in ihrem unteren Bereich, das heißt in ihrem Bodenbereich, durch eine Flachschiebereinrichtung 60 verschlossen. Diese Flachschiebereinrichtung 60 setzt sich wie die Flachschiebereinrichtung 30 aus zwei Flachschiebern zusammen, die jeweils über zwei Pneumatikzylinder 32, 34 hin- und hergeschoben werden können. In Fig. 1 befindet sich diese Flachschiebereinrichtung 60 in ihrer die Speicherbox 50 unten verschließenden Stellung. Diese Flachschiebereinrichtung 60 muss nicht saugdicht ausgebildet sein.

Nach Öffnen der Schiebereinrichtung 60 können die in der Speicherbox 50 vorhandenen Wäschestücke in die darunter liegende weitere Speicherbox 52 hineinfallen. Diese Speicherbox 52 ist wie die Speicherbox 50 ausgebildet. Auch sie wird in ihrem Bodenbereich durch eine Flachschiebereinrichtung 60 verschlossen oder nicht verschlossen. Nach Öffnen der Flachschiebereinrichtung 60 der unteren Speicherbox 52 können die in dieser Speicherbox 52 vorhandenen Wäschestücke in einen unterhalb der untersten Speicherbox 52 positionierten Transportwagen 62 hineinfallen. Dieser Transportwagen besitzt vier Fahrrollen 64 , mit denen er auf dem Boden 44 aufruht. Die Wäsche kann frei aus der untersten Speicherbox 52 in diesen Transportwagen 62 hineinfallen. Dazu ist unterhalb der untersten Speicherbox 52 ein entsprechend großer Freiraum 66 zwischen den vier Ständern 40 vorhanden.

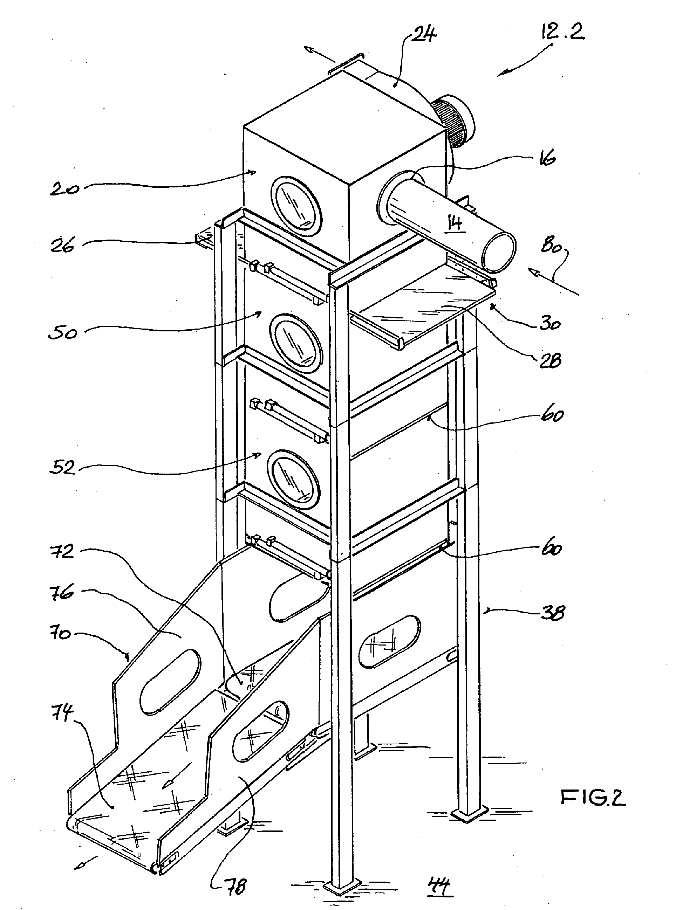

Der in Fig. 2 dargestellte Speicherturm 12.2 entspricht dem Speicherturm 12 bis auf den Unterschied, dass unter seiner unteren Speicherbox 52 eine Fördereinrichtung 70 vorhanden ist, mit der die aus der geöffneten Speicherbox 52 nach unten herausgefallenen Wäschestücke aus dem Bereich des Speicherturms 12.2 heraustransportiert werden können. Im vorliegenden Fall ist unterhalb der untersten Flachschiebereinrichtung 60 der unteren Speicherbox 52 ein inneres endlos umlaufendes Förderband 72 vorhanden, das im vorliegenden Beispielsfall parallel zum Boden 44 vorhanden ist. An dieses innere Förderband 72 schließt sich ein äußeres endlos umlaufendes Förderband 74 an, das schräg zum Boden 44 geneigt ausgerichtet ist. Das innere Förderband 72 und das äußere Förderband 74 werden durch seitliche Begrenzungswände 76, 78 begrenzt. Das innere Förderband 72 wird auch noch auf der hinteren, in Fig. 2 nicht sichtbaren Seite durch eine entsprechende Begrenzungswand eingerahmt.

Beim Betrieb des Speicherturms 12 oder 12.2 werden Wäschestücke in Transportrichtung 80 durch das Saugrohr 14 hindurch in die oberste Speicherbox 20 eingesaugt. Dabei ist die Flachschiebereinrichtung 30, die den Boden dieser Speicherbox 20 bildet, geschlossen und nicht geöffnet wie in den Figuren dargestellt ist. Sobald die gewünschte Menge an Wäschestücken in der Speicherbox 20 vorhanden ist, was durch automatisches Wiegen festgestellt wird, wird die Flachschiebereinrichtung 30 geöffnet. Als Folge davon fallen die Wäschestücke aus der Speicherbox 20 in die darunter befindliche Speicherbox 50. Sofern die Flachschiebereinrichtung 60 dieser Speicherbox 50 geschlossen ist, bleiben die Wäschestücke in dieser Speicherbox 50. Sofern die Flachschiebereinrichtung 60 geöffnet ist, können die Wäschestücke aus der Speicherbox 50 in die darunter befindliche Speicherbox 52 hineinfallen. Bei geöffneter Flachschiebereinrichtung 60 können Wäschestücke auch unmittelbar aus der obersten Speicherbox 20 in diese von oben dritte Speicherbox 52 hineinfallen. Diese Wäschestücke verbleiben in dieser untersten Speicherbox 52, wenn ihre in ihrem Boden angeordnete Flachschiebereinrichtung 60 geschlossen ist. Aus dieser Speicherbox 52 können die Wäschestücke dann entweder in den Transportwagen 62 oder auf die Fördereinrichtung 70 fallen und aus dem Bereich des Speicherturms heraustransportiert werden.

Sobald Wäschestücke aus der obersten Speicherbox 20 nach unten herausgefallen sind, wird ihre Flachschiebereinrichtung 30 wieder verschlossen, so dass neue, weitere Wäschestücke in diese Speicherbox 20 hineingesaugt werden können. Je nach Anzahl der vorhandenen Speicherboxen 50, 52 können unterschiedlich viele Wäschestücke - auch in ihrer Menge und in ihrer Art unterschiedlich - postenmäßig in den einzelnen Speicherboxen zwischengespeichert werden, bevor sie dann nacheinander, postenweise beispielsweise mittels des Transportwagens 62 oder mittels der Fördereinrichtung 70 aus dem Speicherturm 12 beziehungsweise 12.2 heraustransportiert werden.

Die Speicherboxen 20, 50, 52 bauen in dem Speicherturm in die Höhe und können damit sehr platzsparend in der jeweiligen Produktionsstätte aufgestellt werden. Höhenmäßig ist dort regelmäßig ausreichend Bauraum vorhanden. Dadurch nehmen die verschiedenen Speicherboxen 20, 50, 52 im Gegensatz zum Stand der Technik, wo sie nebeneinander angeordnet sind, extrem wenig Stellfläche auf dem Boden 44 in Anspruch.

## Patentansprüche

1. Saugförderanlage (10) zum Transportieren von Einzelteilen,
- mit einem einer Bearbeitungsstätte vorgeschalteten Zwischenspeicher (12, 12.2) mit einem ersten Speicherraum (20) und zumindest einem zweiten Speicherraum (50, 52) für Einzelteile, der unterhalb des ersten Speicherraumes (20) vorhanden ist,
- mit einem Saugrohreinlass (16) in dem ersten Speicherraum (20),
- mit einem Unterdruckerzeuger (24), der so an diesem ersten Zwischenspeicher (20) anschließbar ist, dass Einzelteile durch den Saugrohreinlass (16) hindurch in den ersten Speicherrraum (20) hineinsaugbar sind,
- wobei der erste Speicherraum (20) eine verschließbare Öffnung derart besitzt, dass durch diese geöffnete Öffnung hindurch dieser erste Speicherrraum (20) in den zumindest einen zweiten Speicherraum (50) hinein entleerbar ist,
- **dadurch gekennzeichnet, dass**
- mehrere zweite Speicherräume (50, 52) unterhalb des ersten Speicherraumes (20) so vorhanden sind, dass
- Einzelteile aus dem ersten Speicherraum (20) in die vorhandenen zweiten Speicherräume (50, 52) nacheinander verbringbar sind.

2. Anlage nach Anspruch 1,
- **dadurch gekennzeichnet, dass**
- eine Begrenzungswand, insbesondere die obere Begrenzungswand dieses zweiten Speicherraumes (50), zumindest bereichsweise, der Boden des ersten Speicherraumes (20) ist.

3. Anlage nach einem der vorstehenden Ansprüche,
- **dadurch gekennzeichnet, dass**
- eine Begrenzungswand, insbesondere die obere Begrenzungswand jedes zweiten Speicherraumes (50, 52), zumindest bereichsweise, der Boden des jeweils darüber angeordneten Speicherraumes ist.

4. Anlage nach einem der vorstehenden Ansprüche,
- **dadurch gekennzeichnet, dass**
- der Boden der Speicherräume (20, 50, 52) jeweils als Klappe oder Schieber (26, 28, 30) ausgebildet ist, so dass
- die Speicherräume (20, 50, 52) übereinander liegend als Speicherturm (12,12.2) vorhanden sind.

5. Anlage nach Anspruch 4,
- **dadurch gekennzeichnet, dass**
- unterhalb des Speicherturms (12) oder der Speicherräume (20, 50, 52) ein Freiraum (66) für einen Transportbehälter oder Transportwagen (62) vorhanden ist.

6. Anlage nach Anspruch 4,
- **dadurch gekennzeichnet, dass**
- unterhalb des Speicherturms (12) oder der Speicherräume (20, 50, 52) eine Fördereinrichtung (70) zum Weitertransprot der Einzelteile vorhanden ist.

7. Anlage nach Anspruch 6,
- **dadurch gekennzeichnet, dass**
- die Fördereinrichtung (70) ein endlos umlaufendes Förderband (72, 74) besitzt.

8. Anlage nach einem der vorstehenden Ansprüche,
- **dadurch gekennzeichnet, dass**
- der Boden des ersten Speicherraumes (20), zumindest bereichsweise, durch einen luftdicht verschließbaren Flachschieber (26,28) gebildet wird.

9. Anlage nach einem der vorstehenden Ansprüche,
- **dadurch gekennzeichnet, dass**
- die Speicherräume (20, 50, 52) eine quaderförmige oder würfelförmige Gestalt besitzen.

10. Anlage nach Anspruch 9,
- **dadurch gekennzeichnet, dass**
- die Kantenlängen eines würfelförmigen Speicherraumes (20, 50, 52) etwa 110 Zentimeter groß sind.

11. Anlage nach einem der vorstehenden Ansprüche,
- **dadurch gekennzeichnet, dass**
- ein in den Innenraum des ersten Speicherraumes (20) einwirksames Sauggebläse (24) am ersten Speicherraum (20) befestigbar ist.

12. Anlage nach einem der vorstehenden Ansprüche,
- **dadurch gekennzeichnet, dass**
- die Speicherräume (20, 50, 52) an einem Ständer- oder Traggerüst (38) befestigbar sind.

13. Anlage nach Anspruch 12,
- **dadurch gekennzeichnet, dass**
- das Ständer- oder Traggerüst (38) standfest ausgebildet ist.

14. Anlage nach einem der Ansprüche 6 bis 13,
- **dadurch gekennzeichnet, dass**
- die unterhalb der Speicherräume (20, 50, 52) vorhandene Fördereinrichtung (70) an dem Ständer- oder Traggerüst (38) befestigbar ist.

## Claims

1. Suction-type conveying installation (10) for transporting individual articles,
- having an interim store (12, 12.2) which is arranged upstream of a processing facility and has a first storage chamber (20) and at least one second storage chamber (50, 52) for individual articles, the second storage chamber being provided beneath the first storage chamber (20),
- having a suction-pipe inlet (16) in the first storage chamber (20),
- having a negative-pressure generator (24) which can be connected to this first interim store (20) such that individual articles can be sucked through the suction-pipe inlet (16) into the first storage chamber (20),
- wherein the first storage chamber (20) has a closable opening such that, through this opened opening, this first storage chamber (20) can be emptied into the at least one second storage chamber (50),
- **characterized in that**
- a plurality of second storage chambers (50, 52) are provided beneath the first storage chamber (20) such that
- individual articles can be displaced one after the other out of the first storage chamber (20) into the second storage chambers (50, 52) provided.

2. Installation according to Claim 1,
- **characterized in that**
- a boundary wall, in particular the top boundary wall of this second storage chamber (50), at least in certain regions, is the base of the first storage chamber (20).

3. Installation according to one of the preceding claims,
- **characterized in that**
- a boundary wall, in particular the top boundary wall of each second storage chamber (50, 52), at least in certain regions, is the base of the storage chamber arranged above in each case.

4. Installation according to one of the preceding claims,
- **characterized in that**
- the base of the storage chambers (20, 50, 52) is designed in each case as a shutter or slide (26, 28, 30), and therefore
- the storage chambers (20, 50, 52) are located one above the other as a storage tower (12, 12.2).

5. Installation according to Claim 4,
- **characterized in that**
- there is a free space (66) for a transporting container or transporting carriage (62) present beneath the storage tower (12) or the storage chambers (20, 50, 52).

6. Installation according to Claim 4,
- **characterized in that**
- a conveying arrangement (70) for transporting individual articles further is provided beneath the storage tower (12) or the storage chambers (20, 50, 52).

7. Installation according to Claim 6,
- **characterized in that**
- the conveying arrangement (70) has an endlessly circulating conveying belt (72, 74).

8. Installation according to one of the preceding claims,
- **characterized in that**
- the base of the first storage chamber (20), at least in certain regions, is formed by a flat slide (26, 28) which can be closed in an air-tight manner.

9. Installation according to one of the preceding claims,
- **characterized in that**
- the storage chambers (20, 50, 52) have a cuboidal or cubic configuration.

10. Installation according to Claim 9,
- **characterized in that**
- the edge lengths of a cubic storage chamber (20, 50, 52) are approximately 110 centimetres in size.

11. Installation according to one of the preceding claims,
- **characterized in that**
- a suction fan (24) for acting in the interior of the first storage chamber (20) can be fastened on the first storage chamber (20).

12. Installation according to one of the preceding claims,
- **characterized in that**
- the storage chambers (20, 50, 52) can be fastened on a stand or supporting framework (38).

13. Installation according to Claim 12,
- **characterized in that**
- the stand or supporting framework (38) is of stable design.

14. Installation according to one of Claims 6 to 13,
- **characterized in that**
- the conveying arrangement (70), which is provided beneath the storage chambers (20, 50, 52), can be fastened on the stand or supporting framework (38).

## Revendications

1. Système (10) de transport par aspiration pour transporter des pièces individuelles,
- avec un magasin intermédiaire (12, 12.2) monté en amont d'un poste de traitement et doté d'une première chambre de stockage (20) et d'au moins une deuxième chambre de stockage (50, 52) pour des pièces individuelles, qui est présente en dessous de la première chambre de stockage (20),
- avec une admission de tube d'aspiration (16) dans la première chambre de stockage (20),
- avec un générateur de dépression (24), qui peut être raccordé à ce premier magasin intermédiaire (20) de telle sorte que des pièces individuelles peuvent être aspirées par l'admission de tube d'aspiration (16) dans la première chambre de stockage (20),
- sachant que la première chambre de stockage (20) possède une ouverture pouvant être fermée, de telle sorte que, par cette ouverture ouverte, cette première chambre de stockage (20) peut être vidée dans la deuxième chambre de stockage au moins unique (50),
**caractérisé en ce que** plusieurs deuxièmes chambres de stockage (50, 52) sont présentes en dessous de la première chambre de stockage (20) de telle sorte que des pièces individuelles peuvent être successivement déplacées de la première chambre de stockage (20) dans les deuxièmes chambres de stockage existantes (50, 52).

2. Système selon la revendication 1, **caractérisé en ce qu'**une paroi de délimitation, en particulier la paroi de délimitation supérieure de cette deuxième chambre de stockage (50), constitue au moins en partie le fond de la première chambre de stockage (20).

3. Système selon l'une des revendications précédentes, **caractérisé en ce qu'**une paroi de délimitation, en particulier la paroi de délimitation supérieure de chaque deuxième chambre de stockage (50, 52), constitue au moins en partie le fond de la chambre de stockage respective disposée au-dessus.

4. Système selon l'une des revendications précédentes, **caractérisé en ce que** le fond des chambres de stockage (20, 50, 52) est respectivement réalisé sous forme de volet ou de tiroir (26, 28, 30), de sorte que les chambres de stockage (20, 50, 52) sont présentes en superposition sous forme de tour de stockage (12, 12.2).

5. Système selon la revendication 4, **caractérisé en ce qu'**un espace libre (66) pour un récipient de transport ou un chariot de transport (62) est présent en dessous de la tour de stockage (12) ou des chambres de stockage (20, 50, 52).

6. Système selon la revendication 4, **caractérisé en ce qu'**un dispositif de transport (70) pour transporter plus loin les pièces individuelles est présent en dessous de la tour de stockage (12) ou des chambres de stockage (20, 50, 52).

7. Système selon la revendication 6, **caractérisé en ce que** le dispositif de transport (70) est une bande transporteuse (72, 74) circulant sans fin.

8. Système selon l'une des revendications précédentes, **caractérisé en ce que** le fond de la première chambre de stockage (20) est formé au moins en partie par un tiroir plat (26, 28) pouvant être fermé en étanchéité à l'air.

9. Système selon l'une des revendications précédentes, **caractérisé en ce que** les chambres de stockage (20, 50, 52) possèdent une forme parallélépipédique ou cubique.

10. Système selon la revendication 9, **caractérisé en ce que** les longueurs des côtés d'une chambre de stockage cubique (20, 50, 52) sont d'une taille d'environ 110 centimètres.

11. Système selon l'une des revendications précédentes, **caractérisé en ce qu'**une soufflante aspirante (24) agissant dans l'espace intérieur de la première chambre de stockage (20) peut être fixée sur la première chambre de stockage (20).

12. Système selon l'une des revendications précédentes, **caractérisé en ce que** les chambres de stockage (20, 50, 52) peuvent être fixées sur un bâti porteur ou de support (38).

13. Système selon la revendication 12, **caractérisé en ce que** le bâti porteur ou de support (38) est conçu stationnaire.

14. Système selon l'une des revendications 6 à 13, **caractérisé en ce que** le dispositif de transport (70) présent en dessous des chambres de stockage (20, 50, 52) peut être fixé sur le bâti porteur ou de support (38).
